# DEMANDE DE BREVET EUROPEEN

(11) **EP 3 002 570 A1**
(43) Date de publication de la demande: **06.04.2016**
(21) Numéro de dépôt: 15186326.3
(22) Date de dépôt: 22.09.2015
(51) Int. Cl.: G01J 5/20, G01J 5/08

(54) **DETECTEUR BOLOMETRIQUE A STRUCTURES MIM DE DIMENSIONS DIFFERENTES**

(30) Priorité: 26.09.2014 FR 1459157
(71) Demandeur: Commissariat à l'Énergie Atomique et aux Énergies Alternatives, 75015 Paris (FR)
(72) Inventeur: PALANCHOKE, Ujwol, 13001 MARSEILLE (FR); BOUTAMI, Salim, 38100 GRENOBLE (FR); POCAS, Stéphane, 38000 GRENOBLE (FR); RABAUD, Wilfried, 38250 VILLARD-DE-LANS (FR)
(74) Mandataire: Brevalex

(57) **Abrégé**

Détecteur bolométrique (100) de longueurs d'ondes LWIR, comportant :
- un substrat (102) ;
- une membrane (104) suspendue au-dessus du substrat par des éléments de support (108) ;
- un élément absorbeur comprenant plusieurs structures MIM chacune formée d'un élément métallique inférieur (112), d'un élément métallique supérieur (114) propre à chaque structure MIM et d'un élément diélectrique (110, 118) disposé entre les éléments métalliques inférieur et supérieur ;
- un élément thermomètre comprenant un matériau thermométrique ;
dans lequel :
- la membrane comporte l'élément métallique supérieur, le matériau thermométrique et une partie de l'élément diélectrique de chaque structure MIM,
- les éléments métalliques supérieurs d'au moins deux structures MIM ont des dimensions différentes dans un plan principal de la membrane, et
- l'élément diélectrique de chacune des structures MIM comporte l'un des matériaux suivants présentant des modes vibrationnels dans la gamme LWIR : Al₂O₃, AIN, TiO₂.

## Description

### DOMAINE TECHNIQUE ET ART ANTÉRIEUR

L'invention concerne le domaine des détecteurs thermiques, et plus précisément celui des détecteurs thermiques non refroidis tels que des détecteurs bolométriques, ou bolomètres ou micro-bolomètres, de type résistif. Le détecteur bolométrique selon l'invention est avantageusement utilisé pour réaliser une détection d'une large plage de longueurs d'ondes, notamment dans le domaine infrarouge, par exemple dans le cadre d'applications telles que l'imagerie infrarouge, la vision nocturne, la sécurité, la surveillance, la thermographie et la recherche biologique, ou pour réaliser une détection de gaz.

Pour réaliser une détection dans le domaine infrarouge, un détecteur infrarouge thermique non refroidi comporte généralement un élément sensible dont la température augmente lorsque celui-ci reçoit un rayonnement infrarouge dont la longueur d'onde appartient par exemple à la bande III, ou LWIR (infrarouge lointain, c'est-à-dire des longueurs d'onde entre environ 8 µm et 12 µm, voir entre environ 7 µm et 14 µm) qui est caractéristique de la température et de l'émissivité des éléments observés par ce type de détecteur. L'augmentation de température de l'élément sensible engendre une variation d'une propriété électrique du matériau de cet élément sensible : apparition de charges électriques dans le matériau de l'élément sensible par effet pyroélectrique, variation de la capacité du matériau de l'élément sensible par changement de sa constante diélectrique, variation de la résistance électrique du matériau semi-conducteur ou métallique de l'élément sensible, etc.

Pour obtenir un fonctionnement performant d'un tel détecteur infrarouge thermique, le matériau de l'élément sensible doit remplir de préférence trois conditions principales : il doit avoir une faible capacité thermique, une bonne isolation thermique de la couche active (qui comporte l'élément sensible) vis-à-vis de son support (ces deux premières conditions impliquant une réalisation de l'élément sensible en couche mince) et enfin une forte sensibilité de l'effet de conversion de l'échauffement du matériau en un signal électrique.

Des imageurs infrarouges monolithiques fonctionnant à température ambiante sont par exemple fabriqués en connectant directement une matrice d'éléments sensibles à un circuit de multiplexage en silicium de type CMOS ou CCD.

Pour gagner en performances, le détecteur infrarouge thermique peut être encapsulé sous vide ou dans une atmosphère comprenant un gaz peu conducteur de la chaleur. Le boîtier dans lequel le détecteur infrarouge thermique est encapsulé comporte alors une fenêtre transparente vis-à-vis du rayonnement infrarouge destiné à être détecté par le détecteur infrarouge thermique.

Dans un détecteur bolométrique de type résistif, le rayonnement infrarouge incident est absorbé par l'élément sensible du détecteur, ce qui provoque une augmentation de sa température et induit une variation de la résistance électrique de l'élément sensible. Cette variation de résistance engendre une variation de tension ou de courant aux bornes du détecteur, formant le signal délivré par le détecteur.

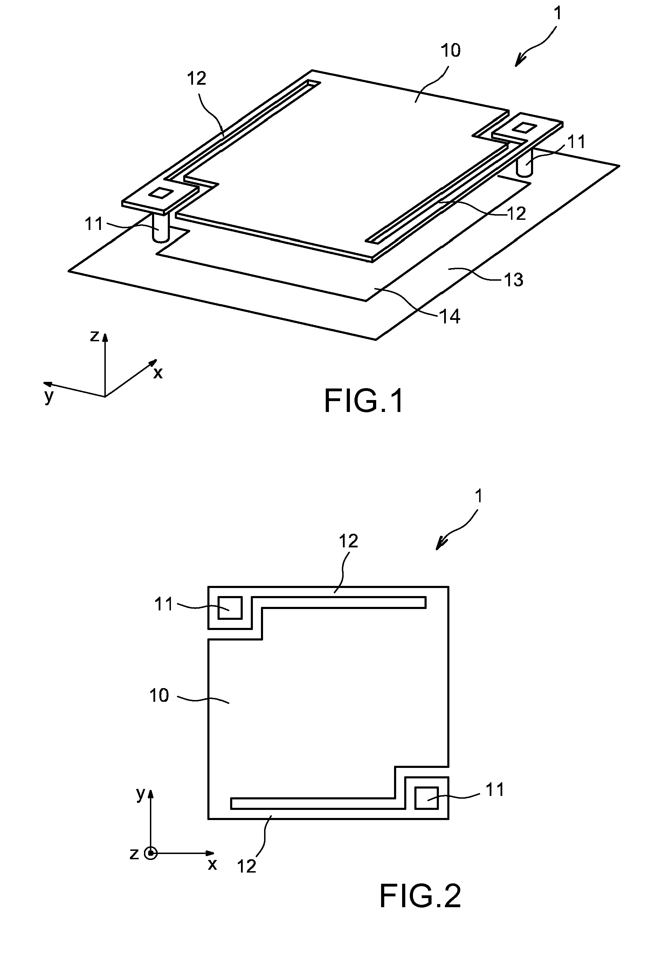

Les figures 1 à 3 représentent respectivement une vue en perspective, une vue de dessus et une vue de profil d'un détecteur bolométrique 1. Ce type de détecteur 1 comporte une fine membrane 10 suspendue au-dessus d'un substrat support 13. Cette membrane 10 forme l'élément absorbeur et l'élément thermomètre du détecteur 1. D'autres détecteurs, analogues à celui représenté sur les figures 1 à 3, sont généralement présents sur le substrat support 13. La membrane 10 est suspendue mécaniquement au-dessus du substrat 13 par l'intermédiaire d'éléments de support 11 auxquels sont fixés des bras d'isolation thermique 12 qui sont reliés mécaniquement à la membrane 10.

Sous l'effet du rayonnement incident reçu par le détecteur 1, la membrane 10 s'échauffe et sa résistance électrique varie en conséquence. Le substrat support 13 comporte un circuit électronique intégré sur un wafer de silicium, ce circuit comprenant d'une part des dispositifs de stimuli et de lecture de l'élément thermomètre de chacun des détecteurs 1, et d'autre part des composants de multiplexage qui permettent de mettre en série les signaux issus des différents éléments thermomètres vers un nombre réduit de sorties afin que ces signaux puissent être exploités par un système d'imagerie usuel. La sensibilité des détecteurs thermiques est notoirement améliorée grâce à la présence des bras d'isolation thermique 12 dans la liaison thermique entre le substrat support 13 et la membrane 10, ces bras permettant de limiter les pertes thermiques de la membrane 10 et par conséquent de préserver son échauffement. L'interconnexion électrique entre l'élément thermomètre du détecteur 1 et les éléments de lecture du circuit électronique est assurée par une couche électriquement conductrice, généralement métallique, qui est disposée sur les bras d'isolation thermique 12, et par les éléments de support 11 qui sont électriquement conducteurs.

Différents matériaux présentant un bon TCR (variation relative de la résistance avec la température, ou « Temperature Coefficient of Resistance ») et un faible bruit en 1/f sont avantageusement utilisés pour réaliser la membrane 10, comme par exemple l'oxyde de vanadium (VO_{X}), le silicium amorphe (a-Si) ou du Ge_{X}Si_{1-X}O_{Y}.

Le détecteur 1 comporte également, sur le substrat 13, un réflecteur métallique 14 disposé en regard de la membrane 10 tel que ce réflecteur 14 et la membrane 10 forment ensemble une cavité optique résonante de type Fabry-Perot. La distance entre la membrane 10 et le réflecteur 14 est choisie telle qu'elle soit égale λ/4, avec λ correspondant à la longueur d'onde destinée à être reçue par le détecteur 1 et pour laquelle une absorption maximale est recherchée, afin d'avoir une forte absorption pour cette longueur d'onde. Cette distance varie selon la longueur d'onde destinée à être absorbée, et est par exemple comprise entre environ 2 et 3 µm pour la gamme de longueurs d'onde 8-12 µm.

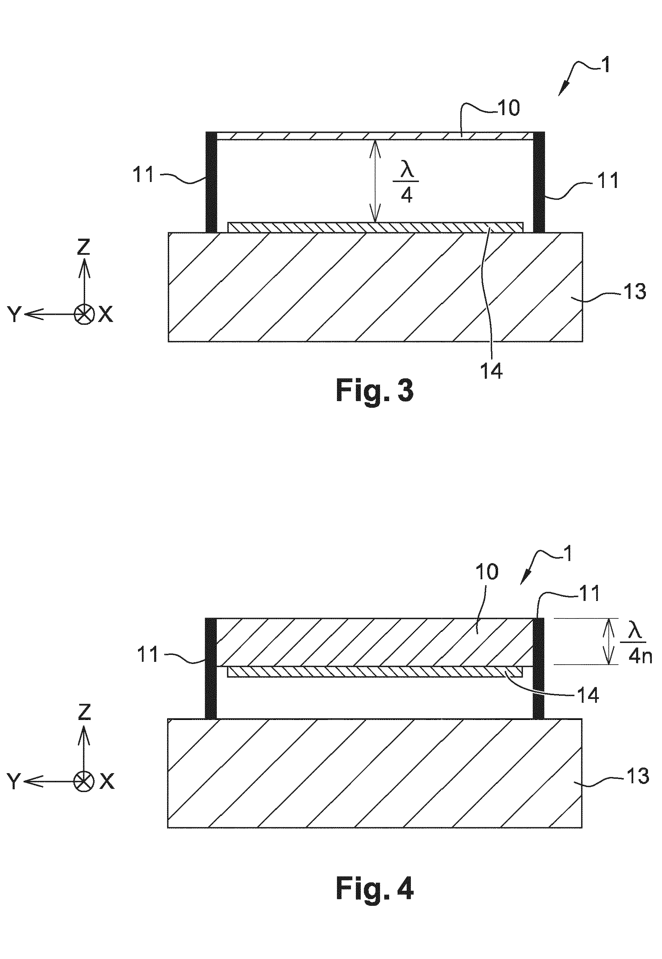

En variante, le détecteur 1 peut être réalisé comme représenté en vue de profil sur la figure 4. Dans cette variante, la cavité résonante est formée par la membrane elle-même qui est réalisée telle que son épaisseur soit égale à λ/(4n), avec n correspondant à l'indice de réfraction de la membrane 10. Le réflecteur 14 est en outre disposé non plus sur le substrat 13, mais contre la face inférieure de la membrane 10. L'épaisseur de la membrane 10, par exemple réalisée en silicium amorphe, varie entre environ 550 nm et 830 nm pour la gamme de longueurs d'onde 8-12 µm.

Les performances d'un détecteur bolométrique sont caractérisées par différents facteurs de mérite : l'écart de température équivalent au bruit (NETD), la responsivité (R), la puissance équivalente de bruit (NEP) et la détectivité (D). Le NETD est défini comme étant la différence de température, au niveau de la source, qui crée un signal de sortie égal au bruit. Le NETD est l'un des paramètres les plus importants pour un détecteur infrarouge, sa valeur dépendant de plusieurs caractéristiques physiques du détecteur: surface du détecteur, facteur de remplissage de la membrane (matériau résistif) et TCR de la membrane. Pour obtenir un détecteur ayant une sensibilité importante, un faible NETD est souhaitable, ce qui requiert un important TCR, une grande surface et un important facteur de remplissage du matériau résistif.

Il est intéressant d'avoir des détecteurs bolométriques de faibles dimensions mais qui conservent de bonnes performances. La simple réduction des dimensions d'un détecteur entraîne toutefois une réduction de sa zone optiquement active, et donc également une réduction du rayonnement collecté par celui-ci. De plus, la surface réservée au matériau résistif se réduit également, ce qui dégrade les performances du détecteur.

L'utilisation d'une structure MIM (Métal-Isolant-Métal, c'est-à-dire une portion diélectrique disposée entre deux couches métalliques) dans un détecteur bolométrique a pour avantage de conférer au détecteur une grande surface efficace d'absorption, le détecteur absorbant le rayonnement reçu sur une surface plus importante que sa surface réelle. Une telle structure MIM permet ainsi de capter les rayonnements qui arrivent sur les bords de la membrane du détecteur (par exemple sur les bras d'isolation thermique ou les éléments de support de la membrane) et qui, sans structure MIM, seraient perdus. Un tel détecteur bolométrique est par exemple décrit dans le document WO 2013/010933 A1.

Par contre, un détecteur bolométrique comportant une structure MIM est sensible en longueur d'onde. Par exemple, avec une structure MIM de section carrée (dans le plan de la membrane du détecteur) de largeur S =λ/(2n), une résonance au premier ordre est obtenue à la longueur d'onde λ pour laquelle le rendement d'absorption est maximal, n correspondant à l'indice de réfraction effectif de la structure MIM et dont la valeur est proche de l'indice de réfraction moyen des éléments se trouvant entre les couches métalliques de la structure MIM.

De telles structures MIM sont donc avantageuses pour la réalisation d'un détecteur bolométrique sélectif en longueur d'onde, mais pas pour la réalisation d'un détecteur bolométrique sans sélectivité spectrale ou avec une faible sélectivité spectrale.

### EXPOSÉ DE L'INVENTION

Un but de la présente invention est de proposer un détecteur bolométrique présentant une grande surface efficace d'absorption, c'est-à-dire pouvant être réalisé avec de faibles dimensions sans dégrader ses performances, tout en n'ayant pas ou peu de sélectivité spectrale dans la gamme LWIR.

Pour cela, la présente invention propose un détecteur bolométrique apte à détecter des longueurs d'ondes de la gamme LWIR, comportant au moins :
- un substrat ;
- une membrane suspendue au-dessus du substrat par des éléments de support ;
- un élément absorbeur comprenant plusieurs structures MIM chacune formée d'un élément métallique inférieur, d'un élément métallique supérieur propre à chacune des structures MIM et d'un élément diélectrique disposé entre l'élément métallique inférieur et l'élément métallique supérieur ;
- un élément thermomètre comprenant au moins un matériau thermométrique ;
   dans lequel :
- la membrane comporte au moins l'élément métallique supérieur, le matériau thermométrique et au moins une partie de l'élément diélectrique de chacune des structures MIM,
- les éléments métalliques supérieurs d'au moins deux des structures MIM ont des dimensions différentes l'une par rapport à l'autre dans un plan principal de la membrane, et
- l'élément diélectrique de chacune des structures MIM comporte au moins l'un des matériaux suivants présentant des modes vibrationnels dans la gamme LWIR : Al₂O₃, AIN, TiO₂.

De manière générale, il est également décrit dans la demande un détecteur bolométrique comportant au moins :
- un substrat ;
- une membrane suspendue au-dessus du substrat par des éléments de support ;
- un élément absorbeur comprenant plusieurs structures MIM chacune formée d'un élément métallique inférieur, d'un élément métallique supérieur propre à chacune des structures MIM et d'un élément diélectrique disposé entre l'élément métallique inférieur et l'élément métallique supérieur ;
- un élément thermomètre comprenant au moins un matériau thermométrique ;
dans lequel la membrane comporte au moins l'élément métallique supérieur, le matériau thermométrique et au moins une partie de l'élément diélectrique de chacune des structures MIM, et dans lequel les éléments métalliques supérieurs d'au moins deux des structures MIM ont des dimensions différentes l'une par rapport à l'autre dans un plan principal de la membrane.

Le détecteur bolométrique comporte plusieurs structures MIM de dimensions différentes. Les structures MIM du détecteur ont donc des longueurs d'onde de résonance propre qui sont différentes les unes des autres, ce qui a pour effet d'élargir le spectre d'absorption global du détecteur bolométrique par rapport à un détecteur bolométrique analogue mais qui ne comporterait pas de structure MIM ou qui comporterait une unique structure MIM ou plusieurs structures MIM de mêmes dimensions. Le détecteur selon l'invention se distingue d'un détecteur multi-spectral dont le spectre d'absorption est formé de plusieurs pics distincts, alors que le spectre d'absorption du détecteur selon l'invention ne comporte pas ou peu de sélectivité spectrale.

Du fait de la grande surface d'absorption efficace obtenue grâce aux structures MIM, le détecteur bolométrique peut être réalisé avec des dimensions réduites par rapport à un détecteur bolométrique ne comportant pas de structure MIM.

De plus, en raison de la structure en deux dimensions des éléments métalliques supérieurs des structures MIM (les éléments métalliques supérieurs étant structurés dans le plan principal de la membrane), l'absorption réalisée par le détecteur bolométrique ne dépend pas de l'état de polarisation du rayonnement incident reçu par le détecteur bolométrique lorsque la structure complète, c'est-à-dire l'ensemble des structures MIM, présente une symétrie dans le cas d'une rotation quart de tour (90°). En l'absence d'une telle symétrie, l'absorption réalisée par le détecteur bolométrique présente une faible sensibilité à la polarisation par exemple si chaque structure MIM comporte une section carrée ou circulaire.

L'expression « structure MIM » désigne ici un empilement comportant au moins un élément diélectrique disposé entre un élément métallique supérieur et un élément métallique inférieur, et apte à réaliser une absorption d'une gamme de longueurs d'onde selon ses dimensions et les matériaux de la structure.

L'expression « élément métallique inférieur » désigne l'élément métallique de chacune des structures MIM qui est disposé entre le substrat et l'élément métallique supérieur de chacune des structures MIM.

L'expression « plan principal de la membrane » désigne un plan parallèle aux deux plus grandes surfaces de la membrane, ou parallèle aux faces principales des différentes couches de matériau qui sont en contact les unes avec les autres au sein de la membrane. Ce plan principal de la membrane peut également être parallèle à une face du substrat en regard de laquelle se trouve la membrane.

La gamme LWIR correspond ici aux longueurs d'onde entre environ 8 µm et 12 µm, ou même entre environ 7 µm et 14 µm.

Les éléments métalliques supérieurs des structures MIM peuvent avoir avantageusement une forme similaire (par exemple carrée, rectangulaire, une forme de disque, polygonale, etc.).

L'élément diélectrique de chacune des structures MIM peut comporter au moins un matériau présentant des modes vibrationnels (c'est-à-dire des modes qui correspondent à des vibrations d'atomes dans les molécules d'un ou plusieurs des matériaux de l'élément diélectrique) dans la gamme de longueurs d'onde LWIR destinées à être détectées par le détecteur bolométrique. Cette résonance vibrationnelle dans l'un ou plusieurs des matériaux de l'élément diélectrique se traduit par une augmentation importante et localisée en longueur d'onde de la partie imaginaire k de l'indice de réfraction (permittivité), avec k de l'ordre ou supérieur à 1, à la longueur d'onde du mode vibrationnel. Cette augmentation de k s'accompagne d'une baisse de la partie réelle n de cet indice, n et k étant reliés par les relations de Kramers-Kroenig. La longueur d'onde de la résonance vibrationnelle peut être considérée comme étant celle qui correspond au minimum de la valeur de n. En présence d'un tel matériau, un pic d'absorption associé à l'absorption intrinsèque du matériau s'ajoute, dans la réponse spectrale des structures MIM, à la résonance (pic d'absorption) propre de structures MIM, élargissant ainsi le spectre d'absorption du détecteur. La longueur d'onde de résonance vibrationnelle de ce matériau et la longueur d'onde de résonance propre de la structure MIM sont toutes deux comprises dans la gamme spectrale d'intérêt du détecteur.

La longueur d'onde de résonance vibrationnelle du matériau diélectrique est avantageusement différente de la longueur d'onde de résonance des structures MIM. Cependant, l'effet d'un élargissement du spectre d'absorption est tout de même obtenu même si cette longueur d'onde de résonance vibrationnelle du matériau diélectrique est égale à la longueur de résonance des structures MIM.

Dans ce cas, l'élément diélectrique peut comporter au moins l'un des matériaux suivants : SiO₂, SiN, SiO, Al₂O₃, AIN, TiO₂.

Selon l'invention, l'élément diélectrique comporte au moins l'un des matériaux suivants : Al₂O₃, AIN, TiO₂.

Les structures MIM peuvent être régulièrement espacées les unes des autres et disposées en formant une matrice de structures MIM.

Dans ce cas, le détecteur bolométrique peut comporter quatre structures MIM disposées en formant une matrice 2 x 2, et dans lequel :
- les quatre structures MIM peuvent comporter, dans le plan principal de la membrane, des dimensions similaires deux à deux, ou
- chacune des quatre structures MIM peut comporter, dans le plan principal de la membrane, des dimensions différentes par rapport à celles des autres structures MIM, ou
- deux premières des quatre structures MIM peuvent comporter, dans le plan principal de la membrane, des dimensions similaires l'une par rapport à l'autre, et deux deuxièmes des quatre structures MIM peuvent comporter des dimensions différentes l'une par rapport à l'autre et différentes de celles des deux premières des quatre structures MIM.

Les dimensions des structures MIM dans le plan principal de la membrane peuvent être comprises entre environ 1000 nm et 2000 nm, par exemple lorsque le détecteur bolométrique est destiné à réaliser une détection dans la gamme LWIR, ou entre environ 300 nm et 700 nm par exemple lorsque le détecteur bolométrique est destiné à réaliser une détection dans la gamme MWIR, et/ou les structures MIM peuvent être disposées les unes à côté des autres avec un pas compris typiquement entre environ 2000 nm et 3000 nm, par exemple lorsque le détecteur bolométrique est destiné à réaliser une détection dans la gamme LWIR, ou entre environ 700 nm et 1000 nm, par exemple lorsque le détecteur bolométrique est destiné à réaliser une détection dans la gamme MWIR.

Le matériau thermométrique peut faire partie de l'élément diélectrique de chacune des structures MIM, ou le matériau thermométrique peut être disposé au-dessus des structures MIM. En utilisant le matériau thermométrique pour former une partie des éléments diélectriques des structures MIM, le détecteur bolométrique présente une bonne constante de temps thermique qui est compatible avec une utilisation du détecteur bolométrique au sein d'un imageur. De plus, la structure d'un tel détecteur bolométrique ne limite pas le choix des matériaux utilisables pour former l'élément absorbeur du détecteur, ce qui ne pénalise pas les performances du détecteur bolométrique à cause du bruit basse fréquence qui reste faible.

Lorsque le matériau thermométrique fait partie de l'élément diélectrique de chacune des structures MIM, la membrane peut comporter en outre, dans chacune des structures MIM, une première couche diélectrique isolant électriquement l'élément métallique supérieur vis-à-vis du matériau thermométrique, et une deuxième couche diélectrique isolant électriquement l'élément métallique inférieur vis-à-vis du matériau thermométrique, les première et deuxième couches diélectriques pouvant faire partie de l'élément diélectrique de chacune des structures MIM.

Les première et deuxième couches diélectriques peuvent être communes à toutes les structures MIM et le matériau thermométrique peut être formé d'une couche commune à toutes les structures MIM.

Selon une première réalisation, la membrane peut comporter l'élément métallique inférieur de chacune des structures MIM. Dans cette configuration, les structures MIM sont formées en totalité par la membrane du détecteur bolométrique.

Selon une deuxième réalisation, l'élément métallique inférieur de chacune des structures MIM peut être disposé sur le substrat tel qu'un espace vide pouvant faire partie de l'élément diélectrique de chacune des structures MIM soit disposé entre la membrane et l'élément métallique inférieur de chacune des structures MIM. Dans cette configuration, la membrane ne forme qu'une partie des structures MIM du détecteur bolométrique.

Les éléments métalliques inférieurs peuvent être formés par au moins une couche métallique commune à toutes les structures MIM ou les éléments métalliques inférieurs peuvent être distincts pour chacune des structures MIM.

Le matériau thermométrique peut être relié électriquement à un circuit électronique du substrat par au moins une couche électriquement conductrice de la membrane et par les éléments de support.

La membrane peut être reliée mécaniquement et électriquement aux éléments de support par des bras d'isolation thermique. Ces bras d'isolation thermique peuvent être formés par des matériaux présents dans la membrane.

Dans chacune des structures MIM, une distance entre l'élément métallique inférieur et l'élément métallique supérieur peut être inférieure ou égale à environ λ/(4n), ou avantageusement égale à environ λ/(10n), avec λ correspondant à une longueur d'onde pour laquelle le rendement d'absorption du détecteur bolométrique est maximal et n correspondant à l'indice de réfraction effectif de la structure MIM. En outre, une cavité réflectrice λ/2 sous les structures MIM n'est pas souhaitée.

L'invention porte également sur un dispositif de détection thermique comportant plusieurs détecteurs bolométriques tels que décrit ci-dessus, lesdits détecteurs bolométriques pouvant être disposés en formant une matrice de pixels telle que chaque détecteur bolométrique forme un seul pixel de la matrice.

Les détecteurs bolométriques peuvent être agencés en formant plusieurs sous-matrices, les détecteurs bolométriques de chacune desdites sous-matrices pouvant être aptes à réaliser une détection d'une gamme de longueurs d'onde différentes de celles destinées à être détectées par les détecteurs bolométriques de la ou des autres sous-matrices.

La matrice peut comporter au moins un détecteur bolométrique d'ébasage comportant une membrane suspendue au-dessus du substrat et reliée thermiquement au substrat.

La matrice peut comporter au moins un détecteur bolométrique de référence ne comportant pas de structure MIM.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- les figures 1 à 3 représentent schématiquement un détecteur thermique infrarouge selon l'art antérieur ;
- la figure 4 représente schématiquement une variante de réalisation d'un détecteur thermique infrarouge selon l'art antérieur ;
- les figures 5 et 6 représentent schématiquement un détecteur bolométrique, objet de la présente invention, selon un premier mode de réalisation ;
- la figure 7 représente schématiquement le détecteur bolométrique, objet de la présente invention, selon une variante du premier mode de réalisation ;
- les figures 8 et 9 représentent des spectres d'absorption d'un détecteur bolométrique selon la configuration particulière de la figure 7 ;
- la figure 10 représente une structure MIM d'un détecteur bolométrique, objet de la présente invention, selon une autre variante du premier mode de réalisation ;
- la figure 11 représente schématiquement un détecteur bolométrique, objet de la présente invention, selon un deuxième mode de réalisation ;
- la figure 12 représente schématiquement un détecteur bolométrique, objet de la présente invention, selon un troisième mode de réalisation ;
- les figures 13A à 13H représentent les étapes d'un procédé de réalisation d'un détecteur bolométrique, objet de la présente invention, selon un mode de réalisation particulier;
- la figure 14 représente schématiquement une partie d'un dispositif de détection thermique multi-spectral, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

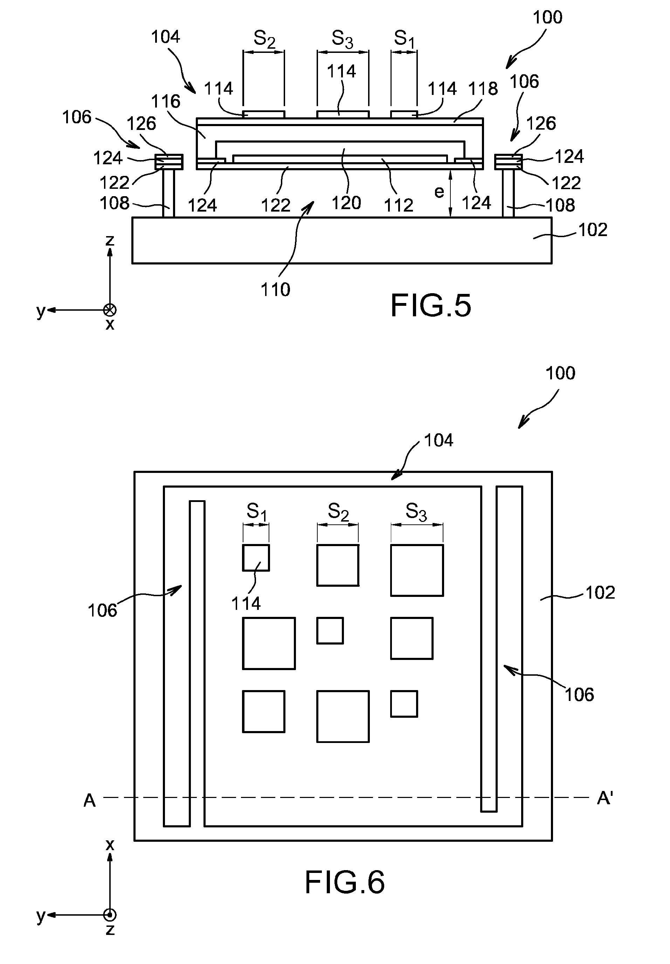

On se réfère tout d'abord aux figures 5 et 6 qui représentent respectivement une vue en coupe de profil et une vue de dessus d'un détecteur bolométrique 100, ou détecteur thermique infrarouge, selon un premier mode de réalisation. La vue en coupe de profil représentée sur la figure 5 est réalisée le long d'un axe AA' représenté sur la figure 6. Le détecteur bolométrique 100 correspond à un bolomètre ou micro-bolomètre destiné à réaliser une détection dans le domaine infrarouge, notamment dans la bande III, c'est-à-dire une détection de longueurs d'ondes comprises entre environ 8 µm et 12 µm, ou entre environ 7 µm et 14 µm.

Le détecteur bolométrique 100 comporte un substrat 102, comprenant par exemple un wafer, ou plaquette, de silicium, formant un support mécanique du détecteur bolométrique 100. Le substrat 102 comporte notamment un circuit électronique intégré (non visible sur les figures 5 et 6) permettant d'alimenter électriquement le détecteur bolométrique 100 et également de lire les signaux délivrés par le détecteur bolométrique 100. Ce circuit électronique peut également comporter un circuit de multiplexage permettant le traitement de signaux délivrés par plusieurs détecteurs bolométriques 100, similaires à celui représentés sur les figures 5 et 6, réalisés au-dessus du substrat 102. Chaque détecteur bolométrique 100 correspond à un pixel d'une matrice de détection formée au-dessus du substrat 102 et qui est reliée électriquement au circuit électronique.

Le détecteur bolométrique 100 comporte une membrane 104 suspendue au-dessus, ou en regard, du substrat 102 via des bras d'isolation thermique 106 auxquels la membrane 104 est reliée mécaniquement et via des éléments de support 108, formant des plots d'ancrage, ou clous, assurant le maintien mécanique de la membrane 104 et des bras d'isolation thermique 106 au-dessus du substrat 102. Un espace vide 110, formant une cavité d'épaisseur e (cette épaisseur correspondant à la dimension entre la membrane 104 et le substrat 102) est présent entre le substrat 102 et la membrane 104, ainsi qu'entre le substrat 102 et les bras d'isolation thermique 106. L'isolation thermique entre la membrane 104 et le substrat 102 est assurée par les bras d'isolation thermique 106 ainsi que par l'espace vide 110. Cette distance entre le substrat 102 et la membrane 104 est indépendante des longueurs d'ondes du rayonnement reçu par le détecteur 100 et destinées à être détectées, et la valeur de l'épaisseur e peut être aussi faible que possible du moment que l'isolation thermique est maintenue entre le substrat 102 et la membrane 104.

La membrane 104 comporte des éléments formant à la fois l'élément absorbeur et l'élément thermomètre du détecteur bolométrique 100. L'élément absorbeur est formé de plusieurs structures MIM réalisées les unes à côté des autres, avantageusement sous la forme d'une matrice à deux dimensions de N structures MIM. Sur l'exemple des figures 5 et 6, la membrane 104 comporte 9 structures MIM disposées sous la forme d'une matrice 3 x 3. En variante, il est possible que les structures MIM soient disposées en formant au moins une partie d'une matrice comportant un nombre différent de ligne et/ou de colonne, ou encore que les structures MIM soient disposées les unes à côté des autres selon un motif différent de celui d'une matrice. De manière générale, la membrane 104 comporte un nombre N de structures MIM supérieur ou égal à 2.

Chacune des structures MIM comporte un élément métallique inférieur 112, réalisé sous la forme d'une portion d'une couche métallique qui, dans le premier mode de réalisation, est commune à l'ensemble des structures MIM de la membrane 104 (c'est-à-dire réalisée sous la forme d'une couche continue), ce qui permet de maximiser l'absorption réalisée par les structures MIM du détecteur bolométrique 100. La couche métallique formant les éléments métalliques inférieurs 112 a ici une épaisseur uniforme et similaire pour toutes les structures MIM.

Chacune des structures MIM comporte également un élément métallique supérieur 114. Chaque élément métallique supérieur 114 a par exemple ici une section, dans un plan parallèle à une face du substrat 102 en regard de laquelle se trouve la membrane 104 (parallèle au plan (X,Y) sur les figures 5 et 6), ou encore dans le plan principal de la membrane 104, de forme carrée. En variante, la forme des éléments métalliques supérieurs 114 pourrait être différente, par exemple ronde, rectangulaire, triangulaire, hexagonale, cruciforme, polygonale, etc. Les éléments métalliques 112 et 114 comportent avantageusement à base un ou plusieurs métaux tels que de l'aluminium, du titane, du tungstène, de l'or, de l'argent, etc.

Le fait que le détecteur bolométrique 100, qui correspond à un seul pixel d'une matrice de détection formée de plusieurs détecteurs bolométriques, comporte plusieurs structures MIM permet de capter plus de lumière, c'est-à-dire d'améliorer le rendement d'absorption du détecteur bolométrique 100, en raison de la plus grande quantité de lumière incidente qui est filtrée/absorbée grâce aux structures MIM qui présentent chacune une grande surface d'absorption efficace.

Les épaisseurs des éléments métalliques inférieurs 112 et des éléments métalliques supérieurs 114 sont faibles afin de ne pas accroître la capacité calorifique de la membrane 104, et sont en outre supérieures à environ 2 fois l'épaisseur de peau des matériaux utilisés. L'épaisseur (dimension selon l'axe Z) des éléments métalliques supérieurs 114 est par exemple supérieure à environ 30 nm, et par exemple comprise entre environ 30 nm et 100 nm, et celle des éléments métalliques inférieurs 112 est par exemple supérieure ou égale à environ 50 nm. En outre, les éléments métalliques 112 et 114 peuvent comporter une résistance par carré inférieure ou égale à environ 1 Ohm/carré.

Les structures MIM comportent également, entre les éléments métalliques inférieurs 112 et les éléments métalliques supérieurs 114, des éléments diélectriques permettant aux structures MIM d'exciter des résonances plasmoniques sur l'ensemble de la gamme des longueurs d'onde destinées à être détectées par le détecteur bolométrique 100. Les résonances plasmoniques se produisent latéralement (dans le plan (X,Y)) dans les éléments diélectriques des structures MIM, en regard des éléments métalliques supérieurs 114.

Ces éléments diélectriques comprennent une couche de matériau thermométrique 116 servant donc à la fois d'élément thermomètre du détecteur bolométrique 100 et d'élément diélectrique, ou isolant, des structures MIM qui forment ensemble l'élément absorbeur du détecteur bolométrique 100. L'épaisseur (dimension selon l'axe Z) de la couche de matériau thermométrique 116 est inférieure ou égale à environ un quart de la plus petite longueur d'onde absorbée, et par exemple comprise entre environ 150 nm et 250 nm. La couche de matériau thermométrique 116 a ici une épaisseur uniforme et similaire pour toutes les structures MIM, cette couche étant continue et commune à l'ensemble des structures MIM.

Les éléments diélectriques des structures MIM comportent également une première couche diélectrique 118, ici commune à toutes les structures MIM et qui assure également le rôle d'isolant électrique et de barrière de diffusion entre les éléments métalliques supérieurs 114 et la couche de matériau thermométrique 116, et donc entre l'élément thermomètre et l'élément absorbeur du détecteur bolométrique 100, ainsi qu'une deuxième couche diélectrique 120 qui assure en outre le rôle d'isolant électrique et de barrière de diffusion entre la couche formant les éléments métalliques inférieurs 112 et la couche de matériau thermométrique 116. Les première et deuxième couches diélectriques 118 et 120 correspondent chacune à une couche diélectrique ou un empilement de plusieurs couches diélectriques très minces, dont l'épaisseur est par exemple comprise entre environ 5 nm et 20 nm, et comportant par exemple du SiN, du SiO, du SiO₂, de l'Al₂O₃, de l'AIN ou du TiO₂, ces matériaux étant choisis tels qu'ils présentent des modes vibrationnels dans la gamme des longueurs d'ondes d'intérêt du détecteur 100 tout en assurant l'isolation électrique entre la couche de matériau thermométrique 116 et les éléments métalliques 112 et 114. Dans la gamme LWIR, le matériau diélectrique comporte de l'Al₂O₃, de l'AIN ou du TiO₂. Le ou les matériaux et épaisseurs de ces couches diélectriques 118, 120 sont également choisis tels que ces couches soient transparentes ou faiblement absorbantes vis-à-vis des longueurs d'ondes destinées à être détectées par le détecteur bolométrique 100. Les couches diélectriques 118 et 120 ont ici chacune une épaisseur uniforme et similaire pour toutes les structures MIM, ces couches étant continues et communes à l'ensemble des structures MIM.

De plus, au sein d'un seul détecteur bolométrique 100, les éléments métalliques supérieurs 114 ont, dans le plan de la membrane 104 (c'est-à-dire un plan parallèle aux faces principales des différentes couches disposées les unes contre les autres pour former la membrane 104, ici parallèle au plan (X,Y)) des dimensions (côté, diamètre, etc.) qui ne sont pas toutes similaires. Ainsi, parmi les N (N ≥ 2) éléments métalliques supérieurs 114 du détecteur bolométrique 100, au moins deux de ces N éléments métalliques supérieurs 114 ont des dimensions différentes l'une par rapport à l'autre dans le plan de la membrane 104. Il est par exemple possible qu'au sein du détecteur bolométrique 100, touts les éléments métalliques supérieurs aient des dimensions, dans le plan de la membrane 104, différentes les unes par rapport aux autres. Il est également possible qu'un premier ensemble d'éléments métalliques supérieurs 114 aient des dimensions différentes par rapport à un ou plusieurs autres ensembles d'éléments métalliques supérieurs 114, les éléments 114 de ce ou de chacun de ces autres ensembles ayant des dimensions similaires les unes par rapport aux autres, et chacun de ces ensembles d'éléments 114 étant formé d'au moins un élément 114. Sur l'exemple représenté sur les figures 5 et 6, trois premiers éléments 114 comportent chacun des côtés de dimension S₁, trois deuxièmes éléments 114 comportent chacun des côtés de dimension S₂, et trois troisièmes éléments 114 comportent chacun des côtés de dimension S₃, avec S₁ < S₂ < S₃. Les dimensions, dans le plan de la membrane 104, de chacun des éléments 114 sont par exemple comprises entre environ 1000 nm et 2000 nm pour un fonctionnement dans la gamme LWIR, ou comprises entre environ 300 nm et 700 nm pour un fonctionnement dans la gamme MWIR. Le pas, ou la période, avec lequel sont réalisés les éléments 114 est par exemple compris entre environ 2000 nm et 3000 nm pour un fonctionnement dans la gamme LWIR, ou compris entre environ 700 nm et 1000 nm pour un fonctionnement dans la gamme MWIR.

Ainsi, du fait que les valeurs des longueurs d'ondes qui sont détectées par le détecteur 100 dépendent notamment des dimensions, dans le plan (X,Y), des éléments métalliques supérieurs 114 des structures MIM (dimensions égales à environ λ/(2n) ou un multiple impaire de λ/(2n), avec λ correspondant à la longueur d'onde pour laquelle le rendement d'absorption est maximal, et n correspondant à l'indice de réfraction effectif de la structure MIM et dont la valeur est proche de l'indice de réfraction moyen des couches comprises entre les éléments métalliques de la structure MIM), le spectre d'absorption du détecteur bolométrique 100 correspond à la superposition des différents spectres des structures MIM de dimensions différentes, pouvant couvrir ainsi une large gamme de longueurs d'onde. En outre, pour éviter d'avoir une diffraction, les éléments métalliques supérieurs 114 sont réalisés les uns à côté des autres avec un pas inférieur à la longueur d'onde pour laquelle le rendement d'absorption est maximal.

Dans chacune des structures MIM, l'épaisseur totale des éléments disposés entre l'élément métallique supérieur 114 et l'élément métallique inférieur 112, c'est-à-dire la somme des épaisseurs de la première couche diélectrique 118, de la deuxième couche diélectrique 120 et du matériau thermométrique 116, et qui correspond à la distance entre les éléments métalliques 112 et 114, est inférieure ou égale à environ λ/(4n), avec ici λ qui correspond à la plus faible longueur d'onde absorbée. Avantageusement, cette épaisseur totale des éléments diélectriques des structures MIM est inférieure ou égale à environ λ/(10n).

Le détecteur 100 comporte en outre une troisième couche diélectrique 122 qui est commune à la membrane 104 et aux bras d'isolation thermique 106, et sur laquelle est disposée une couche électriquement conductrice 124 qui est également commune à la membrane 104 et aux bras d'isolation thermique 106. La couche électriquement conductrice 124, qui est par exemple à base de Ti, de TiN ou de Pt, a par exemple une épaisseur comprise entre environ 5 nm et 100 nm et présente une résistance par carré comprise entre environ 100 et 1000 Ohm par carré. La troisième couche diélectrique 122 est par exemple à base de SiO₂ ou de SiON, et comporte une épaisseur par exemple comprise entre environ 5 nm et 50 nm. Enfin, des portions diélectriques 126 recouvrent des portions de la couche électriquement conductrice 124 se trouvant dans les bras d'isolation thermique 106. Le matériau et l'épaisseur des portions diélectriques 126 sont par exemple similaires à ceux de la troisième couche diélectrique 122.

Dans la membrane 104, des portions de la couche électriquement conductrice 124 sont en contact électriquement avec la couche de matériau thermométrique 116, permettant ainsi d'assurer l'alimentation électrique de la membrane 104 et la lecture des signaux de détection produits. De plus, dans les bras d'isolation thermique 106, des portions de la couche électriquement conductrice 124 sont en contact électriquement avec les éléments de support 108. Ainsi, du fait que les éléments de support 108 sont à base d'un matériau électriquement conducteur, comme par exemple de l'Al, du Cu ou du WSi, et sont reliés électriquement à l'étage d'entrée du circuit électronique intégré au substrat 102, et du fait que les portions de la couche électriquement conductrice 124 de la membrane 104 et des bras d'isolation thermique 106 forment une liaison électrique continue, la couche de matériau thermométrique 116 est reliée électriquement au circuit électronique intégré du substrat 102 via les éléments de support 108 et la couche électriquement conductrice 124.

Les matériaux et les épaisseurs des éléments formant la membrane 104 sont également choisis tels que la membrane 104 ait une bonne tenue mécanique au-dessus du substrat 102 afin d'éviter un fléchissement de la membrane 104.

Dans le détecteur bolométrique 100, le matériau thermométrique 116 est avantageusement utilisé à la fois comme élément thermomètre du détecteur bolométrique 100 et comme élément diélectrique de l'élément absorbeur du détecteur bolométrique 100, au sein des structures MIM du détecteur bolométrique 100. Pour que le matériau thermométrique 116 puisse remplir ces deux fonctions, celui-ci est avantageusement choisi parmi les matériaux dont la résistivité électrique est supérieure ou égale à environ 0,1 Ohm.cm. Ainsi, le matériau thermométrique 116 comporte par exemple du silicium amorphe, du germanium, du SiGe, du ZnS, etc. Ces exemples de matériaux ont tous une résistivité suffisante pour ne pas altérer le fonctionnement optique de la structure MIM et un TCR par exemple compris entre environ 1 % et 5 %, contrairement à un matériau thermométrique correspondant à du Ti, du Pt ou du manganite de lantane qui ont une trop faible résistivité, inférieure à environ 0,1 Ohm.cm. De plus, les exemples de matériaux précédemment cités pour le matériau thermométrique 116 sont transparents ou faiblement absorbants vis-à-vis des longueurs d'ondes destinées à être détectées par le détecteur bolométrique 100, et présentent un fort coefficient de température et un faible bruit basse fréquence.

Dans ce premier mode de réalisation, l'épaisseur, ou hauteur, e de l'espace vide 110 n'intervient pas dans le rendement d'absorption du détecteur bolométrique 100. Ainsi, cette épaisseur e peut être d'une valeur quelconque, mais au moins telle que la membrane 104 et le substrat 102 soient espacés l'un de l'autre d'une distance suffisante pour éviter un contact entre eux en raison des contraintes mécaniques et électrostatiques pouvant être subies par la membrane 104. Cette épaisseur e peut également être ajustée de manière à limiter l'absorption parasite provenant des bras d'isolation thermique 106 et des régions de contact formées par les portions de la couche électriquement conductrice 124 en contact avec le matériau thermométrique 116. Cette épaisseur e est par exemple comprise entre environ 1 µm et 5 µm.

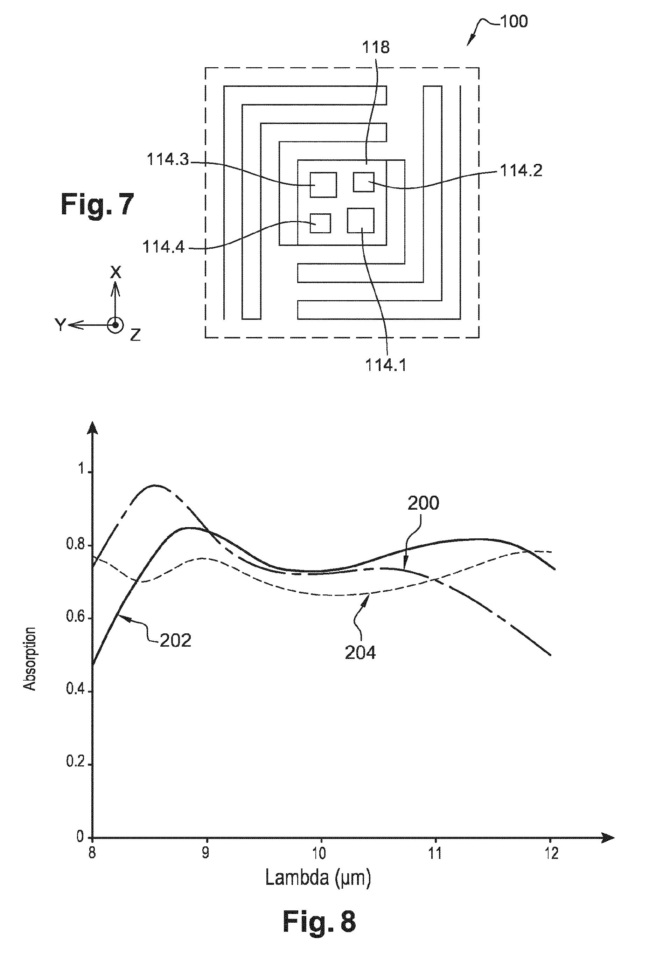

Le figure 7 représente une vue de dessus du détecteur bolométrique 100 selon une variante du premier mode de réalisation précédemment décrit.

Dans cette variante, le détecteur 100 comporte quatre structures MIM comportant chacune un élément métallique inférieur 112, ici formée par une couche commune aux quatre structures MIM comme sur les figures 5 et 6, et l'un des éléments métalliques supérieurs 114.1 - 114.4. Les dimensions dans le plan de la membrane 104

(plan (X,Y)) des éléments métalliques supérieurs 114.1-114.4 ne sont pas similaires. Ainsi, il est possible que :
- les dimensions, dans le plan de la membrane 104, des éléments métalliques supérieurs 114.1 - 114.4 soient différentes pour tous les éléments 114.1 - 114.4 (par exemple, pour des éléments 114.1 - 114.4 ayant chacun une section, dans le plan de la membrane 104, de forme carrée et de dimensions S1 (élément 114.1), S2 (élément 114.2), S3 (élément 114.3) ou S4 (élément 114.4), ces dimensions sont telles que S1 ≠ S2 ≠ S3 ≠ S4), ou
- les dimensions, dans le plan de la membrane 104, de deux des éléments 114.1 - 114.4 soient différentes des dimensions des deux autres éléments 114.1- 114.4 (par exemple S1 = S3 et S2 = S4, et S1 ≠ S2, comme c'est le cas sur l'exemple représenté sur la figure 7), ou
- les dimensions dans le plan de la membrane 104 d'un des éléments 114.1- 114.4 soient différentes de celles des autres éléments 114.1- 114.4 (par exemple S1 = S2 = S3 et S4 ≠ S1).

La courbe 200 représentée sur la figure 8 correspond au spectre d'absorption du détecteur 100 de la figure 7 obtenu dans la gamme 8-12 µm lorsque S1 = S3 = 1,2 µm et S2 = S4 = 1,125 µm.

La courbe 202 représentée sur la figure 8 correspond au spectre d'absorption du détecteur 100 de la figure 7 obtenu dans la gamme 8-12 µm lorsque S1 = 1,275 µm, S2 = 1,125 µm, S3 = 1,2 µm et S4 = 1,3125 µm.

La courbe 204 représentée sur la figure 8 correspond au spectre d'absorption du détecteur 100 de la figure 7 obtenu dans la gamme 8-12 µm lorsque S1 = 1,3875 µm, S2 = 1,125 µm, S3 = 1,125 µm et S4 = 1,3125 µm.

Les courbes 200, 202 et 204 représentées sur la figure 8 sont obtenues avec une couche métallique formant les éléments métalliques inférieurs 112 d'épaisseur égale à 100 nm, un matériau thermométrique 116 formée par une couche de silicium amorphe d'épaisseur égale à 150 nm, des couches diélectriques 118, 120 d'épaisseur égale à 10 nm, et en réalisant les éléments 114.1 - 114.4 avec un pas, ou une période, égal à 1,5 µm, et une épaisseur égale à 50 nm.

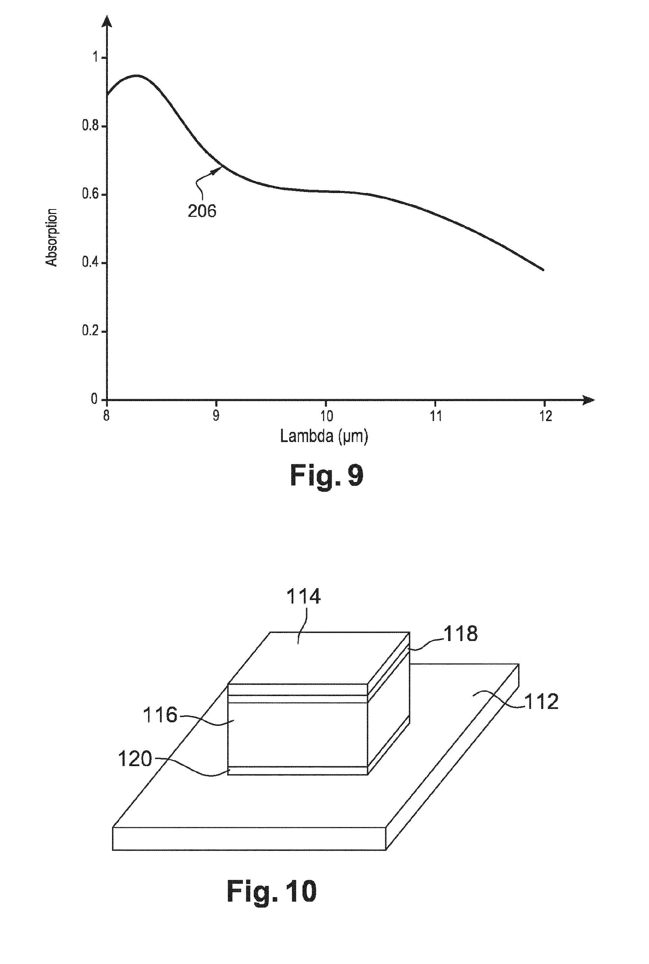

La courbe 206 représentée sur la figure 9 correspond au spectre d'absorption du détecteur 100 de la figure 7 obtenu dans la gamme 8-12 µm lorsque S1 = S3 = 0,7 µm et S2 = S4 = 0,8 µm, lorsque du titane est utilisé pour former les portions métalliques supérieures 114.1-114.4.

En variante du premier mode de réalisation décrit ci-dessus, la première couche diélectrique 118 peut être structurée selon des motifs similaires à ceux des éléments métalliques supérieurs 114. Dans ce cas, chacune des structures MIM comporte des éléments métalliques supérieurs 114 disposés sur des portions diélectriques de forme et de dimensions similaires à celles des portions métalliques supérieures 114. Il est également possible que cette structuration soit également prolongée à travers la couche de matériau thermométrique 116, et éventuellement à travers la deuxième couche diélectrique 120, cette ou ces couches (118+116 ou 118+116+120) se retrouvant dans ce cas également structurées selon des motifs similaires à ceux des éléments métalliques supérieurs 114. La figure 10 représente schématiquement une structure MIM ainsi réalisée, c'est-à-dire dans laquelle la première couche diélectrique 118, la couche de matériau thermométrique 116 et la deuxième couche diélectrique 120 sont également structurées selon un motif similaire à celui de l'élément métallique supérieur 114.

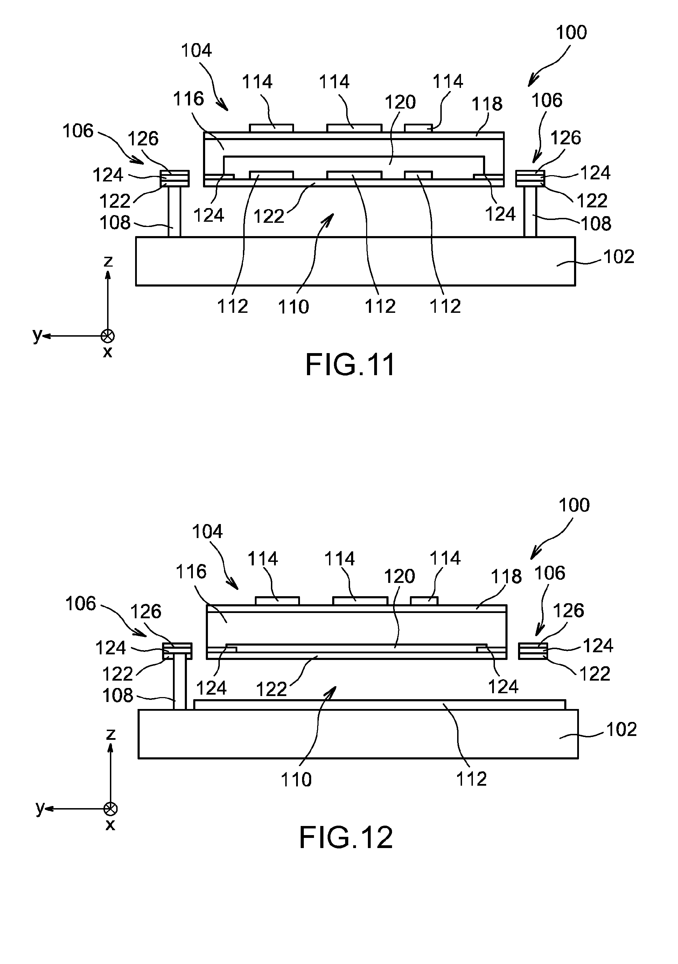

On se réfère maintenant à la figure 11 qui représente une vue en coupe de profil du détecteur bolométrique 100 selon un deuxième mode de réalisation.

Par rapport au premier mode de réalisation précédemment décrit, la membrane 104 ne comporte pas une seule couche métallique commune à l'ensemble des structures MIM et formant les éléments métalliques inférieurs 112 des structures MIM. Ici, chacune des structures MIM de l'élément absorbeur du détecteur bolométrique 100 comporte un élément métallique inférieur 112 distinct. Chacun des éléments métalliques inférieurs 112 est disposé en regard d'un des éléments métalliques supérieurs 114 et comporte ici des dimensions, dans le plan (X,Y), sensiblement similaires à celles de l'élément métallique supérieur 114 en regard duquel il est disposé. L'espacement entre les éléments métalliques inférieurs 112, c'est-à-dire le pas de ces éléments 112, est également similaire à celui entre les éléments métalliques supérieurs 114. En variante, les dimensions et/ou la forme et/ou le pas des éléments métalliques inférieurs 112 pourraient être différents de ceux des éléments métalliques supérieurs 114. Les épaisseurs des éléments métalliques inférieurs 112 sont ici similaires les unes par rapport aux autres, et par exemple de même valeur que celle de la couche formant les éléments métalliques inférieurs 112 du premier mode de réalisation. En outre, des portions de la deuxième couche diélectrique 120 sont disposées entre les éléments métalliques inférieurs 112 afin de les isoler les uns par rapport aux autres. Les autres éléments du détecteur bolométrique 100 selon ce deuxième mode de réalisation sont similaires à ceux du détecteur bolométrique 100 selon le premier mode de réalisation.

Par rapport à une unique couche continue formant les éléments métalliques inférieurs 112 de toutes les structures MIM de l'élément absorbeur du détecteur bolométrique 100 comme dans le premier mode de réalisation, l'utilisation de plusieurs éléments métalliques inférieurs 112 distincts pour chacune des structures MIM du détecteur bolométrique 100 selon ce deuxième mode de réalisation permet de réduire la constante thermique du détecteur bolométrique 100.

De plus, l'utilisation de plusieurs éléments métalliques inférieurs 112 distincts n'est pas pénalisante vis-à-vis de l'absorption résiduelle obtenue dans la mesure où cette configuration permet de limiter les régions susceptibles de dissiper l'énergie électromagnétique reçue en dehors de la résonance recherchée, et permet d'éviter que des zones électriquement conductrices présentant une résistance par carré élevée ne soient exposées au rayonnement incident.

Les variantes précédemment décrites pour le premier mode de réalisation (structuration d'au moins l'une de la première couche diélectrique 118, de la couche de matériau thermométrique 116 et de la deuxième couche diélectrique 120) peuvent s'appliquer également à ce deuxième mode de réalisation.

La figure 12 représente une vue en coupe de profil du détecteur bolométrique 100 selon un troisième mode de réalisation.

Comme dans le premier mode de réalisation, une unique couche métallique continue et commune à toutes les structures MIM forme les éléments métalliques inférieurs 112 des structures MIM de l'élément absorbeur du détecteur bolométrique 100. Par contre, contrairement au premier mode de réalisation dans lequel cette couche métallique inférieure est disposée dans la membrane 104 suspendue au-dessus du substrat 102, elle est ici disposée non pas dans la membrane 104 suspendue, mais sur le substrat 102 telle que la cavité 110 soit formée entre les éléments métalliques inférieurs 112 et la membrane 104. Dans ce troisième mode de réalisation, les éléments diélectriques des structures MIM sont formés par le matériau thermométrique 116, la première couche diélectrique 118, la deuxième couche diélectrique 120 (qui, en variante, peut être omise), la troisième couche diélectrique 122 ainsi que la cavité 110. Dans ce troisième mode de réalisation, l'épaisseur e de la cavité 110 est prise en compte dans le calcul de l'épaisseur du diélectrique des structures MIM qui peut être inférieure ou égale à λ/4n, ou avantageusement inférieure ou égale à λ/10n.

Dans ce troisième mode de réalisation, l'épaisseur de la couche métallique inférieure est choisie suffisamment épaisse pour limiter les pertes par effet Joule en son sein, et par exemple telle que la résistivité des éléments métalliques inférieurs 112 soit inférieure ou égale à environ 0,1 Ohm/carré.

Par rapport au premier mode de réalisation, ce troisième mode de réalisation a pour avantage d'abaisser la constante de temps du détecteur bolométrique 100. De plus, le détecteur bolométrique 100 selon ce troisième mode de réalisation peut être réalisé à moindres coûts car le procédé mis en oeuvre pour réaliser ce détecteur bolométrique 100 suit le processus des étapes classiques des procédés mis en oeuvre pour réaliser des bolomètres. En outre, par rapport aux bolomètres de l'art antérieur, un seul niveau de photolithographie supplémentaire peut être réalisé pour former les éléments métalliques supérieurs 114.

En variante de ce troisième mode de réalisation, plusieurs éléments métalliques inférieurs 112 distincts, formant chacun l'élément métallique inférieure d'une des structures MIM, peuvent être disposés sur le substrat 102 à la place d'une unique couche métallique continue. Les autres variantes précédemment décrites pour le premier mode de réalisation peuvent également s'appliquer au troisième mode de réalisation.

En variante des modes de réalisation précédemment décrits, il est possible que la couche de matériau thermométrique 116 ne soit pas disposée au sein des structures MIM, c'est-à-dire entre les éléments métalliques 112 et 114, mais soit disposée au-dessus des structures MIM. Dans ce cas, la couche de matériau thermométrique 116 repose sur les structures MIM de la membrane 104.

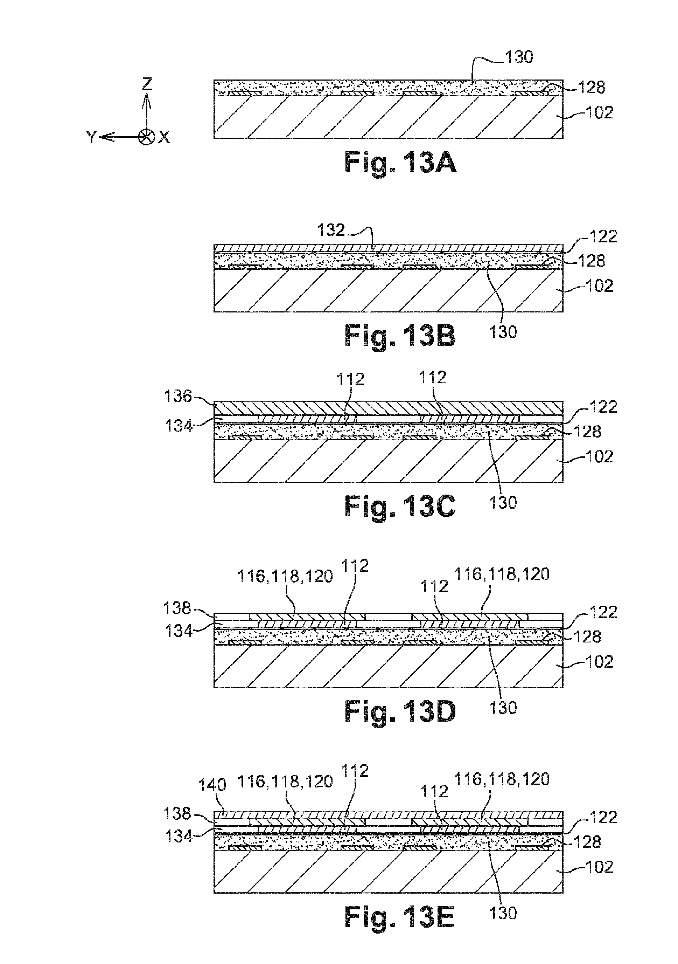

Les figures 13A à 13H représentent les étapes d'un procédé de réalisation de deux détecteurs bolométriques 100 comportant chacun plusieurs structures MIM de dimensions différentes.

Le procédé est mis en oeuvre à partir du substrat 102 comportant le circuit électronique intégré. Des plots de contact électrique 128, auxquels les éléments de support 108 seront destinés à être reliés, sont réalisés sur la face avant du substrat 102. Une première couche sacrificielle 130 est ensuite déposée sur la face avant du substrat 102, recouvrant également les plots 128 et par exemple en polyimide et d'épaisseur comprise entre environ 1 µm et 5 µm (figure 13A). L'épaisseur (dimension selon l'axe Z) de cette première couche sacrificielle 124 correspond à l'épaisseur e de la cavité 110 qui sera formée entre la membrane 104 et le substrat 102.

La troisième couche diélectrique 122 est déposée sur la première couche sacrificielle 130, et une première couche métallique 132, comportant par exemple de l'aluminium, est déposée sur la troisième couche diélectrique 122 (figure 13B). La première couche métallique 132 est destinée à former les éléments métalliques inférieurs 112 des détecteurs 100. Le matériau et l'épaisseur de la première couche métallique 132 sont donc choisis en fonction des caractéristiques souhaitées pour les éléments métalliques inférieurs 112.

La troisième couche diélectrique 122 et la première couche métallique 132 sont ensuite mises en forme, par exemple par lithographie et gravure. Les portions restantes de la première couche métallique 132 forment les éléments métalliques inférieurs 112 des détecteurs 100.

Une deuxième couche sacrificielle 134, comportant par exemple un matériau similaire à celui de la première couche sacrificielle 130, est ensuite déposée puis planarisée avec arrêt sur les éléments métalliques inférieurs 112.

Un empilement de couches 136, comprenant une couche de matériau thermométrique disposée entre deux couches diélectriques, est ensuite déposé sur les portions restantes de la deuxième couche sacrificielle 134 et sur les éléments métalliques inférieurs 112 (figure 13C). Les matériaux et épaisseurs des couches de l'empilement 136 sont choisis en fonction des matériaux et épaisseurs souhaitées de la couche de matériau thermométrique 116 et des couches diélectriques 118, 120 des détecteurs 100.

L'empilement de couches 136 est ensuite mis en forme, par exemple par gravure, afin que des portions restantes de l'empilement 136 forment la couche de matériau thermométrique 116 et les couches diélectriques 118, 120 de chaque structure MIM des détecteurs 100.

Une troisième couche sacrificielle 138, comportant par exemple un matériau similaire à celui des première et deuxième couches sacrificielles 130 et 134, est ensuite déposée puis planarisée avec arrêt sur les portions restantes de l'empilement 136 (figure 13D).

Une deuxième couche métallique 140, comportant par exemple de l'aluminium, est déposée sur les portions restantes de l'empilement 136 et de la troisième couche sacrificielle 138 (figure 13E). La deuxième couche métallique 140 est destinée à former les éléments métalliques supérieurs 114. Le matériau et l'épaisseur de la deuxième couche métallique 140 sont donc choisis en fonction des caractéristiques souhaitées pour les éléments métalliques supérieurs 114.

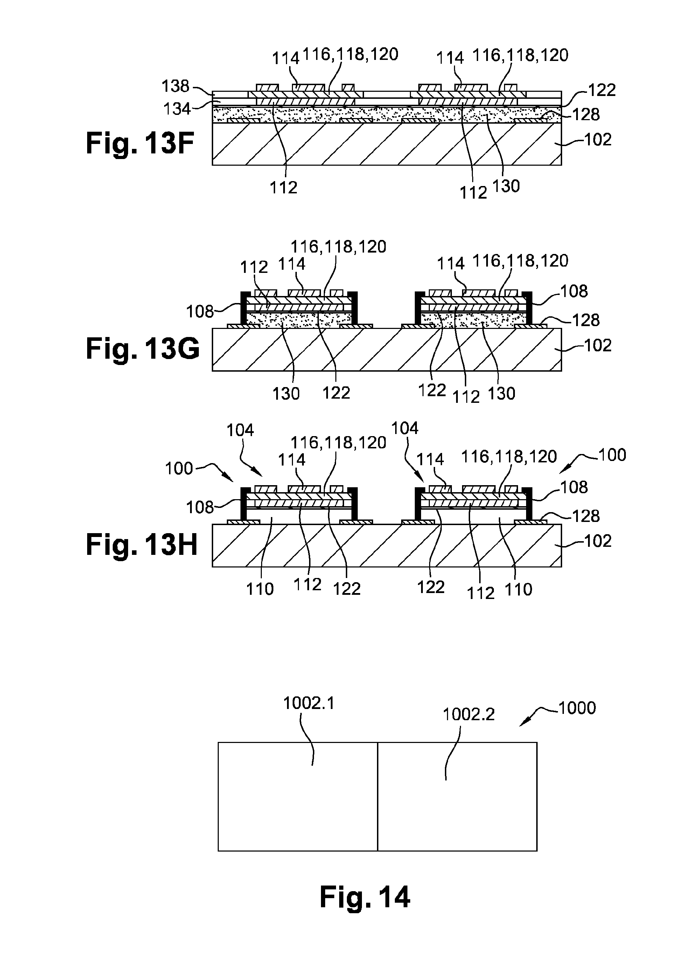

La deuxième couche métallique 140 est ensuite mise en forme, par exemple par lithographie et gravure, afin que les portions restantes de cette couche forment les éléments métalliques supérieurs 114 (figure 13F).

Des vias conducteurs sont ensuite réalisés à travers le matériau sacrificiel des couches 130, 134 et 138, formant les éléments de support 108 des détecteurs 100. Les parties des couches sacrificielles 130, 134 et 138 se trouvant entre les détecteurs 100 sont supprimées, par exemple par gravure (figure 13G).

Enfin, la réalisation des détecteurs 100 achevée en gravant les parties restantes des couches sacrificielles 130, 134 et 138 encore présentes, libérant ainsi les membranes 104 des détecteurs 100 vis-à-vis du substrat 102 (figure 13H).

Dans chaque détecteur 100, la membrane 104 est avantageusement réalisée en couches minces et les bras d'isolation thermique 106 du détecteur bolométrique 100 sont finement définis pour réaliser une isolation thermique efficace de la membrane 104 par rapport au substrat 102 et au circuit électronique formé dans le substrat 102.

Dans le cas du troisième mode de réalisation, la couche métallique inférieure, formant les éléments métalliques inférieurs 112, est réalisée sur le substrat 102 préalablement à la couche sacrificielle 130 qui est déposée ensuite en recouvrant cette couche métallique inférieure.

Les couches minces diélectriques de la membrane 104, c'est-à-dire la première couche diélectrique 118, la deuxième couche diélectrique 120 et la troisième couche diélectrique 122, sont par exemple réalisées par des dépôts à basse température tels que des dépôts par pulvérisation cathodique ou par décomposition plasma (PECVD). La gravure de ces couches, mise en oeuvre après leur dépôt, peut être réalisée par attaque chimique assistée par plasma.

La couche électriquement conductrice 124 est réalisée via un dépôt, par exemple par pulvérisation cathodique, puis structurées par gravure, par exemple par une gravure chimique ou par une gravure par plasma.

Le matériau thermométrique 116 est par exemple déposé à basse température, par exemple par pulvérisation cathodique, décomposition thermique (LPCVD) ou plasma (PECVD). Le dopage éventuel du matériau thermométrique 116 est réalisé en introduisant un gaz dopant (par exemple du BF₃ ou du PH₃) dans le réacteur utilisé pour son dépôt, ou bien par implantation ionique. La gravure du matériau thermométrique 116 est généralement réalisée par un procédé d'attaque chimique assistée par plasma.

Quel que soit le mode de réalisation, plusieurs détecteurs bolométriques 100 sont avantageusement réalisés de manière collective les uns à côté des autres sous la forme d'une matrice, chaque détecteur bolométrique 100 formant un pixel de cette matrice de détection.

Dans chaque détecteur bolométrique 100, la résistance du matériau thermométrique varie en fonction de la température de la scène imagée. Or, les variations de la température de la scène qui sont destinées à être mesurées sont très faibles. Afin de détecter plus facilement ces variations, le circuit électronique intégré au substrat 102 peut comporter un étage amplificateur ou intégrateur à fort gain afin d'amplifier les signaux délivrés par les détecteurs bolométriques 100. Afin d'augmenter la sensibilité de lecture des détecteurs bolométriques 100, il est possible de dériver la fraction invariante du courant mesuré, correspondant à la température de fond de la scène imagée, dans une branche dite « d'ébasage » des détecteurs, pour n'envoyer que la partie variable du courant, correspondant aux variations de températures destinées à être mesurées, vers l'étage amplificateur ou intégrateur du circuit électronique pour éviter de le saturer. Pour cela, une solution peut consister à utiliser comme résistance d'ébasage des bolomètres dits d'ébasage, réalisés à partir des mêmes matériaux que ceux utilisés pour réaliser les détecteurs bolométriques 100, éventuellement thermalisés à la température du plan focal et qui ne réalisent pas de détection de température de la scène du fait que ces bolomètres d'ébasage ne comportent pas de bras d'isolation thermique et comportent donc leur membrane reliée thermiquement au substrat par les éléments de support.

En outre, il est possible qu'une matrice de détecteurs bolométriques 100 soit formée de plusieurs sous-matrices comportant chacune un ou plusieurs détecteurs bolométriques 100 tels que précédemment décrits, chaque sous-matrice étant apte à réaliser une détection d'une gamme de longueurs d'onde différentes de celles aptes à être détectées par les autres sous-matrices, formant ainsi une matrice de détection multi-spectrale.

La figure 14 représente schématiquement une partie d'un dispositif de détection 1000 comportant une matrice de détection multi-spectrale.

Cette matrice de détection multi-spectrale comporte deux sous-matrices 1002.1 et 1002.2 comportant chacune un ou plusieurs détecteurs bolométriques 100 tels que précédemment décrits. Chacune des sous-matrices est apte à réaliser une détection d'une gamme de longueurs d'onde définie par les paramètres (dimensions, forme, pas) des structures MIM des détecteurs bolométriques de chaque sous-matrice. Dans l'exemple de la figure 14, les détecteurs 100 de la première sous-matrice 1002.1 sont aptes à réaliser une détection dans la gamme LWIR, et ceux de la deuxième sous-matrice 1002.2 sont aptes à réaliser une détection dans la gamme MWIR. Le dispositif de détection 1000 peut comporter un nombre plus important de sous-matrices selon les gammes spectrales destinées à être détectées.

Le ou les détecteurs d'une des sous-matrices (par exemple une troisième sous-matrice) peuvent servir de référence aux détecteurs bolométriques des autres sous-matrices. Ce ou ces détecteurs servant de référence ne sont pas sensibles au rayonnement reçu par le dispositif de détection, par exemple en réalisant ce ou ces détecteurs tels qu'ils ne comportent pas de structure MIM comme les détecteurs bolométriques des autres sous-matrices. Ainsi, en soustrayant la ou les valeurs du ou des signaux délivrés par le ou les détecteurs de cette sous-matrice de référence aux valeurs des signaux délivrés par les détecteurs bolométriques des autres sous-matrices, il est possible de supprimer le mode commun présent dans les signaux délivrés par les détecteurs des autres sous-matrices.

De plus, une ou plusieurs des sous-matrices peuvent comporter des bolomètres dits d'ébasage comme précédemment décrit.

Quel que soit le mode de réalisation, les dimensions des détecteurs bolométriques 100 sont fonction de la taille du pixel destiné à être formé par les détecteurs bolométriques 100.

## Revendications

1. Détecteur bolométrique (100) apte à détecter des longueurs d'ondes de la gamme LWIR, comportant au moins :
- un substrat (102) ;
- une membrane (104) suspendue au-dessus du substrat (102) par des éléments de support (108) ;
- un élément absorbeur comprenant plusieurs structures MIM chacune formée d'un élément métallique inférieur (112), d'un élément métallique supérieur (114) propre à chacune des structures MIM et d'un élément diélectrique (110, 116, 118, 120, 122) disposé entre l'élément métallique inférieur (112) et l'élément métallique supérieur (114) ;
- un élément thermomètre comprenant au moins un matériau thermométrique (116) ;
dans lequel :
- la membrane (104) comporte au moins l'élément métallique supérieur (114), le matériau thermométrique (116) et au moins une partie de l'élément diélectrique (110, 116, 118, 120, 122) de chacune des structures MIM,
- les éléments métalliques supérieurs (114) d'au moins deux des structures MIM ont des dimensions différentes l'une par rapport à l'autre dans un plan principal de la membrane (104), et
- l'élément diélectrique (110, 116, 118, 120, 122) de chacune des structures MIM comporte au moins l'un des matériaux suivants présentant des modes vibrationnels dans la gamme LWIR : Al₂O₃, AIN, TiO₂.

2. Détecteur bolométrique (100) selon la revendication 1, dans lequel les structures MIM sont régulièrement espacées les unes des autres et disposées en formant une matrice de structures MIM.

3. Détecteur bolométrique (100) selon la revendication 2, comportant quatre structures MIM disposées en formant une matrice 2 x 2, et dans lequel :
- les quatre structures MIM comportent, dans le plan principal de la membrane, des dimensions similaires deux à deux, ou
- chacune des quatre structures MIM comporte, dans le plan principal de la membrane, des dimensions différentes par rapport à celles des autres structures MIM, ou
- deux premières des quatre structures MIM comportent, dans le plan principal de la membrane, des dimensions similaires l'une par rapport à l'autre, et deux deuxièmes des quatre structures MIM comportent des dimensions différentes l'une par rapport à l'autre et différentes de celles des deux premières des quatre structures MIM.

4. Détecteur bolométrique (100) selon l'une des revendications précédentes, dans lequel les dimensions des structures MIM dans le plan principal de la membrane (104) sont comprises entre environ 1000 nm et 2000 nm et/ou dans lequel les structures MIM sont disposées les unes à côté des autres avec un pas compris entre environ 2000 nm et 3000 nm.

5. Détecteur bolométrique (100) selon l'une des revendications précédentes, dans lequel le matériau thermométrique (116) fait partie de l'élément diélectrique (110, 116, 118, 120, 122) de chacune des structures MIM, ou dans lequel le matériau thermométrique (116) est disposé au-dessus des structures MIM.

6. Détecteur bolométrique (100) selon la revendication 5, dans lequel, lorsque le matériau thermométrique (116) fait partie de l'élément diélectrique (110, 116, 118, 120, 122) de chacune des structures MIM, la membrane (104) comporte en outre, dans chacune des structures MIM, une première couche diélectrique (118) isolant électriquement l'élément métallique supérieur (114) vis-à-vis du matériau thermométrique (116), et une deuxième couche diélectrique (120) isolant électriquement l'élément métallique inférieur (112) vis-à-vis du matériau thermométrique (116), et dans lequel les première (118 et deuxième (120) couches diélectriques font partie de l'élément diélectrique (110, 116, 118, 120, 122) de chacune des structures MIM.

7. Détecteur bolométrique (100) selon la revendication 6, dans lequel les première (118) et deuxième (120) couches diélectriques sont communes à toutes les structures MIM et le matériau thermométrique (116) est formé d'une couche commune à toutes les structures MIM.

8. Détecteur bolométrique (100) selon l'une des revendications précédentes, dans lequel la membrane (104) comporte l'élément métallique inférieur (112) de chacune des structures MIM.

9. Détecteur bolométrique (100) selon l'une des revendications 1 à 7, dans lequel l'élément métallique inférieur (112) de chacune des structures MIM est disposé sur le substrat (102) tel qu'un espace vide (110) faisant partie de l'élément diélectrique (110, 116, 118, 120, 122) de chacune des structures MIM soit disposé entre la membrane (104) et l'élément métallique inférieur (112) de chacune des structures MIM.

10. Détecteur bolométrique (100) selon l'une des revendications précédentes, dans lequel les éléments métalliques inférieurs (112) sont formés par au moins une couche métallique commune à toutes les structures MIM, ou les éléments métalliques inférieurs (112) sont distincts pour chacune des structures MIM.

11. Détecteur bolométrique (100) selon l'une des revendications précédentes, dans lequel le matériau thermométrique (116) est relié électriquement à un circuit électronique du substrat (102) par au moins une couche électriquement conductrice (124) de la membrane (104) et par les éléments de support (108).

12. Détecteur bolométrique (100) selon l'une des revendications précédentes, dans lequel la membrane (104) est reliée mécaniquement et électriquement aux éléments de support (108) par des bras d'isolation thermique (106).

13. Dispositif de détection thermique (1000) comportant plusieurs détecteurs bolométriques (100) selon l'une des revendications précédentes, lesdits détecteurs bolométriques (100) étant disposés en formant une matrice de pixels telle que chaque détecteur bolométrique forme un seul pixel de la matrice.

14. Dispositif (1000) selon la revendication 13, dans lequel les détecteurs bolométriques (100) sont agencés en formant plusieurs sous-matrices (1002.1, 1002.2), les détecteurs bolométriques (100) de chacune desdites sous-matrices (1002.1, 1002.2) étant aptes à réaliser une détection d'une gamme de longueurs d'onde différentes de celles destinées à être détectées par les détecteurs bolométriques (100) de la ou des autres sous-matrices (1002.1, 1002.2).

15. Dispositif (1000) selon l'une des revendications 13 ou 14, dans lequel la matrice comporte au moins un détecteur bolométrique d'ébasage comportant une membrane suspendue au-dessus du substrat et reliée thermiquement au substrat.

16. Dispositif (1000) selon l'une des revendications 13 à 15, dans lequel la matrice comporte au moins un détecteur bolométrique de référence ne comportant pas de structure MIM.
